# DEMANDE DE BREVET EUROPEEN

(11) **EP 1 510 470 A2**
(43) Date de publication de la demande: **02.03.2005**
(21) Numéro de dépôt: 04292096.7
(22) Date de dépôt: 27.08.2004
(51) Int. Cl.: B65D 81/26, B65D 77/20, B65D 1/34, B29C 51/22

(54) **Barquette absorbante avec ou sans barrière et procédé de fabrication**

(30) Priorité: 29.08.2003 FR 0310301
(71) Demandeur: Huhtamaki France S.A., 28700 Auneau (FR)
(72) Inventeur: Vetillart, Christian, 92190 Meudon (FR)
(74) Mandataire: Debay, Yves

(57) **Abrégé**

L'invention concerne un procédé de fabrication de barquettes absorbantes dont l'emballage principal (1) est élaboré à partir d'une structure thermoformable comportant une matière plastique expansée à cellules fermées, par formage sur un moule pourvu d'alvéoles de conformation en barquette. Le procédé selon l'invention comprend les étapes suivantes :
- moulage par aspiration sous vide dudit emballage principal (1) dans lesdites alvéoles avec formation d'une enceinte d'encastrement pour plaquer une feuille d'absorbante sur le fond de l'emballage principal,
- approvisionnement d'une feuille absorbante (2) en polystyrène expansé comprenant une partie interne expansée avec des cellules ouvertes,
- perçage de trous (20) sur au moins une face de ladite feuille absorbante (2),
- fixation d'une feuille absorbante (2) en matériau expansé dans l'enceinte d'encastrement de l'emballage principal (1).

## Description

La présente invention concerne le domaine des emballages en plastique permettant le conditionnement des denrées alimentaires sous atmosphère modifiée. L'invention concerne plus particulièrement une barquette absorbante avec ou sans barrière et le procédé de fabrication correspondant.

Il est connu de fabriquer des barquettes en matériau thermoformable expansé, réalisées sous forme d'un sandwich comportant deux feuilles dont une est en matériau expansé, la feuille intermédiaire est en matériau absorbant, et la feuille supérieure constituant le fond de la barquette, soit en matériau plastique thermofusible, soit en matière plastique telle qu'un polystyrène. La plupart des procédés connus impliquent des opérations de reprise, notamment consistant à fabriquer tout d'abord un ou plusieurs rouleaux de matière expansée. Ensuite, les rouleaux sont repris sur une chaîne de fabrication de barquettes dans laquelle les deux rouleaux de matière plastique et un rouleau de matière absorbante telle que de la cellulose sont assemblés pour former un sandwich dont la couche centrale est constituée par la matière absorbante. Des perforations sont prévues sur une face de ce sandwich, puis le sandwich est thermoformé, et découpé pour constituer des barquettes. Un tel procédé présente l'inconvénient de nécessiter un réchauffage des matières plastiques en vue de leur thermoformage et un gaspillage en matière absorbante lorsque le ruban de matériau absorbant occupe toute la longueur de la barquette, y compris la partie non utile comme enseigné par la demande de brevet européen EP-A-0 182 139. De plus, la présence de la couche absorbante a pour conséquence de limiter l'étirement de la matière plastique et la profondeur des barquettes ainsi obtenue, et empêche le recyclage des déchets de détourage du fait de la présence de cette matière absorbante.

Il est connu dans l'art antérieur, par la demande de brevet FR 2 041 489, un procédé de fabrication en continu de récipients en matières thermoplastiques expansées avec extrusion et expansion de la matière tout en refroidissant une partie du produit extrudé, de manière à fermer des cellules du polymère en expansion. Ce procédé, permet de produire des récipients expansés, munis d'une peau sur une ou les deux faces. Toutefois, les récipients obtenus par ce procédé n'offrent pas de propriétés de barrière pour l'exposition et la conservation de denrées alimentaires sur une longue durée.

Il est connu également des barquettes d'emballage avec une couche de matériau présentant des propriétés de barrière à l'eau et au gaz. Les polymères PET, PETG, PMMA, PA, EVOH, PVC, les résines ionomères sont autant d'exemples de matériaux ayant cet effet de barrière. Il est connu l'utilisation en multicouche du copolymère éthylène/alcool vinylique EVOH. Le brevet FR 2 826 908 du même déposant, qui concerne une structure multicouche pour le conditionnement et son procédé de fabrication, en est un exemple.

Il est connu des barquettes (PS/EVOH/PE), destinées à la conservation de denrées alimentaires, mises sous vide puis réinjectées sous 100% de CO₂ ou d'un gaz/mélange de gaz neutre à la pression atmosphérique et recouvertes d'un film EVOH/PE imperméable à l'oxygène à 1 cm³/m²/24h. Un absorbeur d'oxygène peut être ajouté au préalable dans ces barquettes. L'objectif essentiel de ces différentes barquettes de l'art antérieur est d'assurer la conservation des aliments stockés pendant une durée plus importante. Toutefois, ces barquettes ne garantissent pas une excellente présentation du produit, sans liquide dans la barquette. La présence d'un papier absorbant en cellulose permet d'améliorer substantiellement cette présentation, mais l'aliment est en contact avec de la cellulose qui pourrait faciliter la prolifération de micro-organismes. De plus, le papier absorbant colle souvent à l'aliment quand on sort celui-ci de sa barquette.

Dans le cas de la viande préemballée, la stabilité de la couleur de celle-ci est le facteur de qualité le plus important qui contribue à sa durée de vie. Le consommateur associe la couleur rouge vif de l'oxymyoglobine à une qualité satisfaisante de viande.

Il est connu dans l'art antérieur des barquettes absorbantes en polystyrène destinées au conditionnement de viande fraîche ou de volaille sans papier absorbant entre la barquette et l'aliment. Le mode de fabrication de ces barquettes repose tout d'abord sur l'expansion du polystyrène dans deux extrudeuses avec coextrusion de deux feuilles. La feuille supérieure est à cellules ouvertes et la feuille inférieure à cellules fermées. Ensuite est ajouté, via une opération de plaxage avec une résine adhésive, un film polystyrène cristal de chaque côté de la double feuille. La feuille complexe ainsi obtenue, comportant 4 couches, est ensuite thermoformée en barquettes dont la surface intérieure est microperforée afin de permettre l'écoulement des liquides vers la couche absorbante sous-jacente à cellules ouvertes. La demande de brevet PCT WO 00/46125 enseigne des barquettes sans papier absorbant, comprenant une barrière pour le conditionnement avec un gaz neutre, obtenues par ce type de procédé. La fabrication de telles barquettes exige une opération de plaxage sur chaque côté de la double feuille pour lier les couches externes aux couches internes. Cette opération peut se montrer délicate à mettre en oeuvre, notamment lorsque l'on souhaite obtenir un profil de barquettes avec de nombreuses nervures sur les surfaces externes. De plus les barrières de fluide (liquide/gaz) sont posées sous la forme d'un film sur les faces externes des barquettes, ces faces externes étant souvent exposées à des chocs. Hors un simple grattage de ce film suffit pour que les propriétés de barrière de la barquette disparaissent.

La présente invention a donc pour objet de pallier un ou plusieurs des inconvénients de l'art antérieur en définissant une barquette absorbante d'aspect homogène avec ou sans barrière, garantissant un conditionnement esthétique.

A cet effet, l'invention concerne une barquette absorbante, avec ou sans barrière, comprenant une feuille absorbante et un emballage principal thermoformé composé notamment d'une matière plastique expansée, caractérisée en ce que la feuille absorbante est du type à base d'une polystyrène ayant des couches externes à cellules fermés et une partie interne expansée avec des cellules ouvertes et comprend des perforations permettant l'écoulement de liquide dans ladite partie interne expansée avec des cellules ouvertes de ladite feuille absorbante, l'emballage principal ayant des parois agencées pour former une enceinte d'encastrement et de plaquage de la feuille absorbante sur le fond de l'emballage principal, la matière expansée de l'emballage principal étant à cellules fermées.

Selon une autre particularité de l'invention, l'enceinte d'encastrement comprend un logement creux formé dans le fond de l'emballage principal pour recevoir la feuille absorbante.

Selon une autre particularité de l'invention, ladite feuille absorbante est perforée sur au moins une de ses faces et constituée d'au moins une couche interne à cellules ouvertes et de couches de surface à cellules fermées.

Selon une autre particularité de l'invention, la feuille absorbante est maintenue dans le logement creux de l'emballage principal par aux moins deux ergots ou rebords de butée formant sensiblement une gorge dans le logement dudit emballage.

Selon une autre particularité de l'invention, la feuille absorbante comprend au moins un point de fixation par collage sur l'emballage principal.

Selon une autre particularité de l'invention, ledit logement creux a une forme rectangulaire avec des angles droits ou arrondis, une profondeur correspondant sensiblement à l'épaisseur de la feuille absorbante et comprise entre 2 et 9 mm, la base du logement étant plane, la surface dudit logement représentant au moins 40% de la surface correspondant au fond de la barquette.

Selon une autre particularité de l'invention, ledit emballage principal comporte un revêtement barrière aux fluides placé sur la face de la barquette recevant la feuille absorbante dite face intérieure, comprenant au moins une couche d'un matériau barrière aux gaz sélectionné parmi le groupe composé du copolymère éthylène/alcool vinylique (EVOH), du polyéthylène téréphtalate (PET), du chlorure de polyvinylidène (PVDC) et du polyéthylène naphtalate (PEN).

Selon une autre particularité de l'invention, le revêtement barrière consiste en un film comprenant le copolymère éthylène/alcool vinylique (EVOH) et une couche d'interface apte à se fixer à une couche de structure de l'emballage principal, un film barrière transparent comprenant au moins un matériau imperméable à l'oxygène fermant l'emballage principal.

Selon une autre particularité de l'invention, l'emballage principal comporte une couche de structure en matière plastique expansée à base d'une polyoléfine.

Selon une autre particularité de l'invention, l'emballage principal est constitué d'une structure multicouche coextrudée en matière plastique comprenant au moins une couche de polyoléfine et une couche d'un matériau barrière aux gaz.

Selon une autre particularité, la barquette selon l'invention comprend un bord périphérique pour recevoir un film barrière transparent opercule (4) constitué d'un matériau notamment imperméable à l'oxygène (O₂).

Un autre but de l'invention est d'apporter une solution à un ou plusieurs des problèmes rencontrés dans l'art antérieur en définissant un procédé de fabrication de barquettes présentant des propriétés d'absorption pour le conditionnement esthétique de produits alimentaires courants tels que viande, poisson ou équivalent.

Ce but est atteint par un procédé de fabrication de barquettes absorbantes, avec ou sans barrière, comprenant l'élaboration de l'emballage principal de la barquette à partir d'une structure thermoformable comportant une matière plastique expansée à cellules fermées, par formage sur un moule pourvu d'alvéoles de conformation de ladite structure en barquette, caractérisé en qu'il comporte les étapes suivantes :
- étape de thermoformage en moulant par aspiration sous vide l'emballage principal dans lesdites alvéoles de conformation avec formation d'une enceinte d'encastrement pour plaquer une feuille absorbante sur le fond de l'emballage principal,
- approvisionnement d'une feuille absorbante en polystyrène expansé comprenant une partie interne expansée avec des cellules ouvertes et des couches externes à cellules fermées,
- perçage de trous sur au moins une face de ladite feuille absorbante,
- fixation d'une feuille absorbante en matériau expansé dans l'enceinte d'encastrement de l'emballage principal,
- découpe finale des barquettes à l'unité en synchronisme avec la position des alvéoles.

Selon une autre particularité de l'invention, la structure thermoformable de l'emballage principal comprend une couche de structure en polystyrène rigide.

Selon une autre particularité de l'invention, la feuille absorbante est élaborée par extrusion avec une phase de refroidissement en surface pour que la feuille comprenne des couches externes à cellules fermées et au moins une couche interne à cellules ouvertes.

Selon une autre particularité de l'invention, un revêtement barrière aux fluides est inséré, par une étape de laminage, sur la face intérieure de l'emballage principal avant le formage sur ledit moule.

Selon une autre particularité de l'invention, au moins une polyoléfine extrudée est coextrudée avec un polymère barrière aux fluides pour former la structure thermoformable de l'emballage principal.

Selon une autre particularité de l'invention, l'étape de fixation de la feuille absorbante est précédée d'une étape de dépôt d'au moins un point de collage sur la surface intérieure de l'emballage principal.

L'invention, avec ses caractéristiques et avantages, ressortira plus clairement à la lecture de la description faite en référence aux dessins annexés dans lesquels :
- la figure 1 représente une vue en coupe d'une barquette dans un mode de réalisation de l'invention,
- la figure 2 représente un écorché d'un exemple de barquette selon l'invention,
- la figure 3 représente schématiquement les principales étapes du procédé selon l'invention,
- la figure 4 représente une vue en coupe d'une barquette dans une variante de réalisation de l'invention.

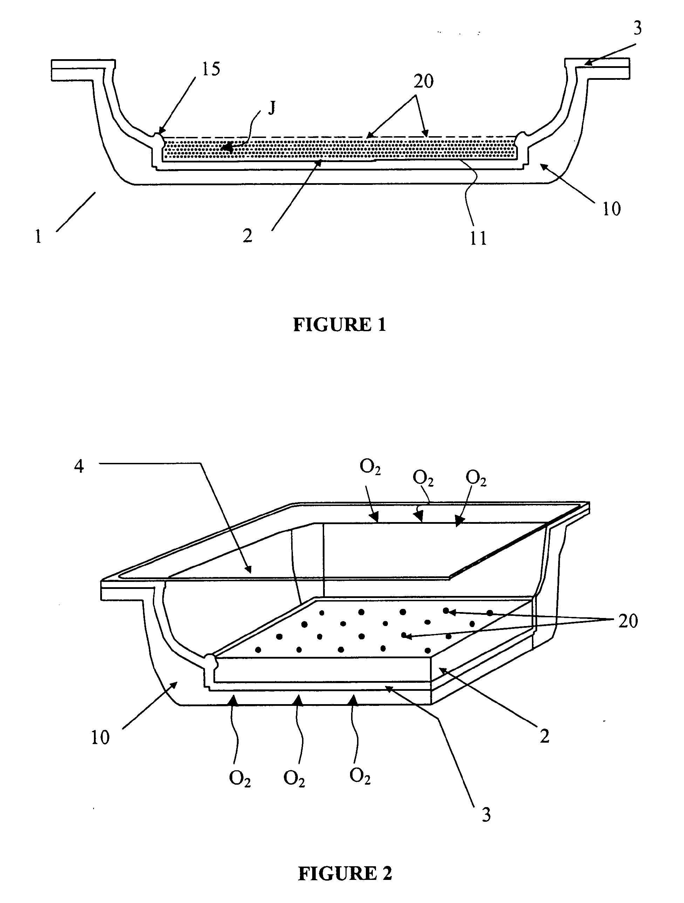

L'invention va être à présent décrite en référence aux figures 1, 2 et 3. Le matériau de structure utilisé pour l'élaboration de l'emballage principal (1) et la feuille absorbante (2) peut être du polystyrène dans un premier mode de réalisation de l'invention. Dans des variantes, le polystyrène de l'emballage principal (1) peut être remplacé par une structure coextrudée ou par d'autres polyoléfines de propriétés analogues. La barquette absorbante peut être pourvue ou non d'une barrière aux liquides et/ou gaz.

Dans le mode de réalisation de la figure 1, la barquette selon l'invention comprend un emballage principal (1) en polystyrène expansé à cellules fermées ou autre matière plastique équivalente, rendu rigide par thermoformage. Une feuille absorbante (2) à base de polystyrène est intégrée dans l'emballage principal (1) pour donner l'aspect d'une barquette d'un seul tenant. Cette feuille (2) comprend une partie interne expansée avec des cellules ouvertes et comporte une pluralité de perforations (20) réparties sur l'ensemble de sa surface extérieure pour permettre l'écoulement de liquide tel que le jus de viande (J) dans la partie interne. Elle comprend des couches externes à cellules fermées qui sont non absorbantes pour le contact alimentaire. L'emballage principal (1) a des parois agencées pour former une enceinte d'encastrement et de plaquage de la feuille absorbante (2) sur le fond de l'emballage principal (1).

Dans le mode de réalisation des figures 1 et 2, les dimensions de la feuille absorbante (2) sont inférieures ou égales aux dimensions du fond de l'emballage (1). L'enceinte d'encastrement comprend un logement creux (11) formé dans le fond de l'emballage principal pour recevoir la feuille absorbante (2). L'épaisseur de la feuille absorbante (2) est sensiblement égale à la profondeur du logement (11) dans lequel elle est insérée. La forme de la feuille absorbante (2) est sensiblement la même que la forme du logement (11) de l'emballage principal (1). Des moyens de fixation (15) disposés à la périphérie dudit logement (11) permettent de maintenir la feuille absorbante (2) dans sa position. Ces moyens de fixation (15) comprennent par exemple aux moins deux ergots ou des rebords de butée formant sensiblement une gorge dans le logement (11) dudit emballage (1). La feuille (2) vient par exemple s'encastrer dans le logement (11) par une pluralité de points d'appui avec les rebords de butée.

Un revêtement barrière (3) aux fluides peut être placé sur la face de la barquette recevant la feuille absorbante (2) dite face intérieure de l'emballage principal (1). Ce revêtement barrière (3) assure une imperméabilité vis-à-vis des liquides et des gaz (odeurs) et permet d'éviter une oxydation trop précoce par l'oxygène de l'air (O₂) du contenu de la barquette. La barquette est adaptée pour être recouverte d'un film barrière transparent opercule (4, figure 2) constitué d'un matériau notamment imperméable à l'oxygène (O₂). Elle comprend un bord périphérique pour recevoir ce film transparent (4). Ce film (4) est inséré après remplissage des denrées dans la barquette. Le revêtement barrière (3) comprend une couche d'un polymère barrière consistant par exemple en EVOH. Dans un mode de réalisation de l'invention, cette couche peut être constituée par n'importe quel matériau barrière aux gaz sélectionné parmi le groupe composé du copolymère éthylène/alcool vinylique (EVOH), du polyéthylène téréphtalate (PET), du chlorure de polyvinylidène (PVDC) et du polyéthylène naphtalate (PEN). Le film (4) transparent opercule peut comporter deux couches : EVOH/PE ou toute autre combinaison équivalente. Le film (4) recouvre l'ouverture de l'emballage principal (1) et est fixé au bord de l'emballage (1) de la barquette.

Le revêtement barrière (3) aux fluides est inséré sur la face intérieure de l'emballage principal (1) avant formage de la barquette. Cette insertion peut être réalisée par une étape de laminage du revêtement barrière (3) sur la face intérieure de l'emballage principal (1). L'adhésion entre le revêtement barrière (3) et le matériau de structure de l'emballage (1) peut être réalisée lors du thermoformage, le revêtement barrière (3) consistant par exemple en un film comprenant le copolymère éthylène/alcool vinylique (EVOH) et une couche d'interface à base de copolymère éthylène-vinylacétate ou plus généralement une couche constituée d'un matériau apte à se fixer à une couche de structure (10) de l'emballage principal (1). Le revêtement (3) peut être simplement déposé sur la couche de structure (10) en polyoléfine expansée de l'emballage (1), la couche d'interface adhérant à la couche de structure (10) lors de l'élévation en température subie lors du thermoformage. En variante, le revêtement barrière (3) et la couche de structure (10) peuvent être prélaminés avant la phase de formage.

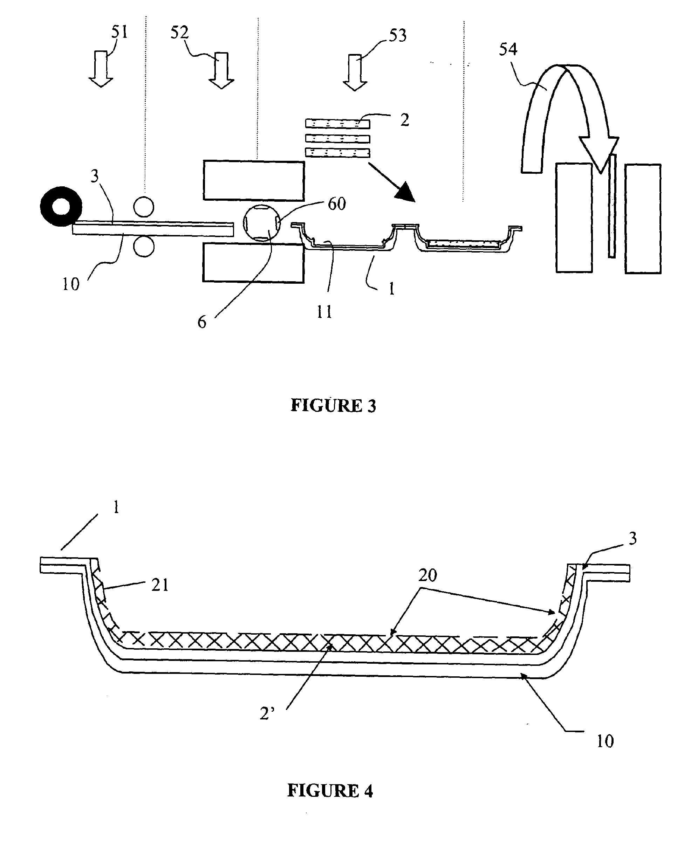

Pour aboutir à la barquette absorbante prête à recevoir des denrées alimentaires représentée à la figure 1, il faut préalablement fabriquer par une transformation classique du thermoformage une feuille continue en matériau plastique qui fournira la couche de structure (10) de l'emballage (1). Dans une variante de réalisation, on fabrique par extrusion une feuille continue de polystyrène expansé du type à cellules fermées avant l'étape (52) de thermoformage avec conformation en barquette. Cette feuille peut également être constituée d'une autre polyoléfine aux propriétés similaires ou matière plastique expansée à base d'une polyoléfine à cellules fermées. Le polystyrène ou polymère analogue formant la couche de structure est rigide. Dans l'exemple de la figure 3, un revêtement barrière (3), se présentant par exemple sous la forme d'un film multicouche, est accolé contre la couche de structure (10) formée par ladite feuille. Dans d'autres modes de réalisation de l'invention, l'emballage principal (1) peut être dépourvu d'un tel revêtement (3). L'étape (51) de fabrication de la structure à conformer peut être réalisée en ligne avec l'étape suivante (52) de thermoformage.

L'élaboration de la barquette de la figure 1 comprend une étape (52) de thermoformage en moulant la structure constituée de la feuille et du revêtement (3) par formage, avec aspiration sous vide, sur un moule de formage (6) pourvu d'alvéoles (60) de conformation. Il peut s'agir d'un formage séquentiel à plat réalisé par l'intermédiaire d'un moule avec forme et contre forme. En variante, on peut envisager d'utiliser une roue de formage. L'emballage principal (1) ainsi obtenu a la forme d'une barquette et comporte une enceinte d'encastrement pour plaquer une feuille absorbante (2) sur son fond. Dans l'exemple de la figure 3, l'emballage principal comprend à son fond un logement (11) creux sensiblement plat, dont la profondeur est de préférence inférieure à 1 cm. Cette profondeur dudit logement (11) est comprise par exemple entre 2 et 9 mm. La forme du logement (11) peut être rectangulaire avec des angles droits ou arrondis. La base du logement (11) est plane et sa surface représente au moins 40% de la surface correspondant au fond de la barquette. Les feuilles absorbantes (2) à base de polystyrène expansé approvisionnent la ligne de fabrication après l'étape (52) de thermoformage. Les feuilles absorbantes (2) sont préalablement perforées sur au moins une face. Dans un mode de réalisation de l'invention, ces feuilles absorbantes sont fabriquées en parallèle avec la ligne de fabrication de la structure de l'emballage principal (1). Les feuilles absorbantes (2) sont élaborées par extrusion avec une phase de refroidissement en surface durant l'expansion pour que les couches externes aient des cellules fermées tandis qu'au moins une couche interne est à cellules ouvertes. Le perçage de trous (20) peut être réalisé avant ou après le découpage en feuilles absorbantes (2) de dimensions déterminées aptes à se fixer dans l'enceinte d'encastrement de l'emballage principal (1).

Dans le mode de réalisation de la figure 3, la feuille absorbante (2) obtenue posède une épaisseur sensiblement égale à la profondeur du logement (11) dans lequel elle est insérée. La forme de la feuille absorbante (2) peut être sensiblement la même que la forme du logement (11) de l'emballage principal (1). L'étape de fixation (53) de la feuille absorbante (2) dans l'enceinte d'encastrement de l'emballage principal (1) est réalisée avant l'étape (54) de découpe finale en synchronisme avec la position des alvéoles (60). Les moyens de fixation (15) disposés à la périphérie dudit logement (11) permettent de maintenir la feuille absorbante (2) dans sa position. L'encastrement peut être réalisé par un appareil de pose (non représenté) amenant la feuille absorbante (2) de manière descendante dans l'enceinte d'encastrement pour plaquer cette feuille (2) sur le fond de l'emballage (1). Dans une variante, l'étape de fixation (53) de la feuille absorbante (2) est précédée d'une étape de dépôt d'au moins un point de collage sur la surface intérieure de l'emballage principal (1). La feuille absorbante (2) comprend ainsi un ou plusieurs points de fixation par collage sur l'emballage principal (1).

L'insertion d'un revêtement barrière (3) aux fluides et notamment aux gaz peut être réalisée par fabrication d'une structure multicouche coextrudée en matière plastique comprenant au moins une couche de polyoléfine extrudée et une couche d'un matériau barrière aux gaz/fluides. La couche de polyoléfine est par exemple expansée. La barrière formée d'EVOH ou d'un polymère aux propriétés similaires peut être insérée dans une couche interne de l'emballage (1). La couche de copolymère éthylène/alcool vinylique EVOH comprend par exemple une teneur molaire de l'éthylène par rapport à l'alcool vinylique variant entre 29 et 44%. L'épaisseur de la couche barrière aux gaz est comprise par exemple entre 10 et 20 micromètres.

L'invention va être à présent décrite en liaison avec la figure 4.

Le mode de réalisation présenté à la figure 4 montre une feuille absorbante (2') pourvue de parois latérales (21) et recouvrant sensiblement la totalité de l'intérieur de l'emballage principal (1). Les parois de l'emballage principal (1) forment une enceinte d'encastrement, l'ouverture de l'emballage ayant des dimensions inférieures aux dimensions de la feuille absorbante (2'), de sorte que le surplus de la feuille absorbante soit plaqué sur les flancs de l'emballage principal (1). Le plaquage de cette feuille (2') contre le fond de l'emballage (1) peut être réalisé par un poinçon de dimensions déterminées sensiblement égales aux dimensions de la feuille absorbante (2') et dont la périphérie vient déformer les parois latérales (21) de cette feuille (2'). Les dimensions du poinçon sont donc comprises entre les dimensions externes et internes de la feuille absorbante (2'). L'épaisseur de ces parois latérales (21) peut être rétrécie par l'action du poinçon. Toute la périphérie de l'enceinte d'encastrement constitue un appui qui déforme légèrement les parois (21) de la feuille absorbante (2') en polystyrène et contribue au maintien de cette feuille au fond de l'emballage (1).

Les perforations (20) sont pratiquées sur toute la surface de la feuille absorbante (2'), sans traverser complètement la feuille (2'). Les liquides et jus pouvant exsuder des denrées alimentaires peuvent alors être pleinement absorbés en passant à travers ses perforations (20), y compris lorsque ces liquides se concentrent dans les angles de la barquette illustrée à la figure 4. Le fait d'utiliser du polystyrène ayant des couches externes à cellules fermées pour la feuille absorbante (2') permet d'éviter le contact des liquides absorbés dans la couche interne à cellules ouvertes avec le revêtement barrière (3) disposé sur l'intérieur de l'emballage principal (1). Dans un mode de réalisation de l'invention, un ou plusieurs points de colle peuvent également servir au maintien en position plaquée de la feuille absorbante (2).

Un des avantages de l'invention réside dans le fait que l'emballage, pouvant être absorbant, est adapté au conditionnement sous atmosphère modifiée de denrées alimentaires, notamment des viandes. Le produit est en général bien visible par le consommateur à travers le film transparent. Le choix du consommateur sera déterminé par l'aspect attractif du produit et la moindre trace de liquide, le moindre changement de couleur dû à l'oxydation de l'air suffisent pour qu'un produit soit totalement délaissé.

Un autre des avantages de l'invention est que la structure de l'emballage principal (1) peut intégrer un revêtement barrière (3) particulièrement protégé des dégradations puisqu'il n'est pas externe, ceci afin d'augmenter la durée de vie du produit conditionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Barquette absorbante, avec ou sans barrière, comprenant une feuille absorbante (2, 2') et un emballage principal (1) thermoformé composé notamment d'une matière plastique expansée, **caractérisée en ce que** la feuille absorbante (2, 2') est du type à base d'une polystyrène ayant des couches externes à cellules fermés et une partie interne expansée avec des cellules ouvertes et comprend des perforations (20) permettant l'écoulement de liquide dans ladite partie interne expansée avec des cellules ouvertes de ladite feuille absorbante (2, 2'), l'emballage principal (1) ayant des parois agencées pour former une enceinte d'encastrement et de plaquage de la feuille absorbante (2, 2') sur le fond de l'emballage principal, la matière expansée de l'emballage principal (1) étant à cellules fermées.

2. Barquette selon la revendication 1, dans laquelle l'enceinte d'encastrement comprend un logement creux (11) formé dans le fond de l'emballage principal (1) pour recevoir la feuille absorbante (2).

3. Barquette selon la revendication 1 ou 2, dans laquelle ladite feuille absorbante (2, 2') est perforée sur au moins une de ses faces et constituée d'au moins une couche interne à cellules ouvertes et de couches de surface à cellules fermées.

4. Barquette selon la revendication 2 ou 3, dans laquelle la feuille absorbante est maintenue dans le logement creux de l'emballage principal (1) par aux moins deux ergots ou rebords de butée formant sensiblement une gorge dans le logement (11) dudit emballage (1).

5. Barquette selon l'une quelconque des revendications 1 à 4, dans laquelle la feuille absorbante (2, 2') comprend au moins un point de fixation par collage sur l'emballage principal (1).

6. Barquette selon l'une quelconque des revendications 2 à 5, dans laquelle ledit logement creux (11) a une forme rectangulaire avec des angles droits ou arrondis, une profondeur correspondant sensiblement à l'épaisseur de la feuille absorbante (2) et comprise entre 2 et 9 mm, la base du logement (11) étant plane, la surface dudit logement (11) représentant au moins 40% de la surface correspondant au fond de la barquette.

7. Barquette selon l'une quelconque des revendications 1 à 6, dans laquelle ledit emballage principal (1) comporte un revêtement barrière (3) aux fluides placé sur la face de la barquette recevant la feuille absorbante dite face intérieure, comprenant au moins une couche d'un matériau barrière aux gaz sélectionné parmi le groupe composé du copolymère éthylène/alcool vinylique (EVOH), du polyéthylène téréphtalate (PET), du chlorure de polyvinylidène (PVDC) et du polyéthylène naphtalate (PEN).

8. Barquette selon la revendication 7, dans laquelle le revêtement barrière (3) consiste en un film comprenant le copolymère éthylène/alcool vinylique (EVOH) et une couche d'interface apte à se fixer à une couche de structure de l'emballage principal, un film barrière transparent comprenant au moins un matériau imperméable à l'oxygène fermant l'emballage principal.

9. Barquette selon l'une quelconque des revendications 1 à 8, dans laquelle l'emballage principal (1) comporte une couche de structure en matière plastique expansée à base d'une polyoléfine.

10. Barquette selon l'une quelconque des revendications 1 à 6, dans laquelle l'emballage principal (1) est constitué d'une structure multicouche coextrudée en matière plastique comprenant au moins une couche de polyoléfine et une couche d'un matériau barrière aux gaz.

11. Barquette selon l'une quelconque des revendications 1 à 10, comprenant un bord périphérique pour recevoir un film barrière transparent opercule (4) constitué d'un matériau notamment imperméable à l'oxygène (O₂).

12. Procédé de fabrication de barquettes absorbantes, avec ou sans barrière, comprenant l'élaboration de l'emballage principal (1) de la barquette à partir d'une structure thermoformable comportant une matière plastique expansée à cellules fermées, par formage sur un moule (6) pourvu d'alvéoles (60) de conformation de ladite structure en barquette, **caractérisé** en qu'il comporte les étapes suivantes :
- étape (52) de thermoformage en moulant par aspiration sous vide l'emballage principal (1) dans lesdites alvéoles de conformation (60) avec formation d'une enceinte d'encastrement pour plaquer une feuille absorbante (2, 2') sur le fond de l'emballage principal (1),
- approvisionnement d'une feuille absorbante (2, 2') en polystyrène expansé comprenant une partie interne expansée avec des cellules ouvertes et des couches externes à cellules fermées,
- perçage de trous (20) sur au moins une face de ladite feuille absorbante (2, 2'),
- fixation (53) d'une feuille absorbante (2, 2') en matériau expansé dans l'enceinte d'encastrement de l'emballage principal (1),
- découpe finale (54) des barquettes à l'unité en synchronisme avec la position des alvéoles (60).

13. Procédé selon la revendication 12, dans lequel la structure thermoformable de l'emballage principal (1) comprend une couche de structure en polystyrène rigide.

14. Procédé selon la revendication 12 ou 13, dans lequel la feuille absorbante (2, 2') est élaborée par extrusion avec une phase de refroidissement en surface pour que ladite feuille (2, 2') comprenne des couches externes à cellules fermées et au moins une couche interne à cellules ouvertes.

15. Procédé selon l'une quelconque des revendications 12 à 14, dans lequel un revêtement barrière (3) aux fluides est inséré, par une étape de laminage, sur la face intérieure de l'emballage principal (1) avant le formage sur ledit moule (6).

16. Procédé selon l'une quelconque des revendications 12 à 14, dans lequel au moins une polyoléfine extrudée est coextrudée avec un polymère barrière aux fluides pour former la structure thermoformable de l'emballage principal (1).

17. Procédé selon l'une quelconque des revendications 12 à 16, dans lequel l'étape de fixation de la feuille absorbante (2, 2') est précédée d'une étape de dépôt d'au moins un point de collage sur la surface intérieure de l'emballage principal (1).
